Europäisches Patentamt

European Patent Office

Office européen des brevets

(19)

(11) Publication number: **0 156 842**

**B1**

# (12) EUROPEAN PATENT SPECIFICATION

(45) Date of publication of patent specification: **27.04.88**

(51) Int. Cl.⁴: **B 64 F 1/22**

(21) Application number: **84903443.4**

(22) Date of filing: **13.09.84**

(86) International application number:
**PCT/FI84/00064**

(87) International publication number:
**WO 85/01265 28.03.85 Gazette 85/08**

(54) **APPARATUS TO MOVE WHEELED VEHICLE.**

(30) Priority: **13.09.83 FI 833275**
**04.07.84 FI 842677**

(43) Date of publication of application:
**09.10.85 Bulletin 85/41**

(45) Publication of the grant of the patent:
**27.04.88 Bulletin 88/17**

(84) Designated Contracting States:
**AT BE CH DE FR GB LI NL SE**

(56) References cited:
**DE-A-2 826 161**
**US-A-2 987 133**
**US-A-3 005 510**

(73) Proprietor: **SINKKONEN, Matti**
**SF-40950 Muurame (FI)**

(72) Inventor: **SINKKONEN, Matti**
**SF-40950 Muurame (FI)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Bavariaring 4**
**D-8000 München 2 (DE)**

Courier Press, Leamington Spa, England.

## Description

This invention is directed to a moving apparatus to move a wheeled vehicle, e.g. motor vehicle, trailer or airplane on a surface, e.g. ground, road, airfield, floor of a building, loading platform, back of a truck or railway truck, according to the pre-characterizing portion of claim 1. The apparatus comprises a drive wheel rotated by a power source, e.g. motor or engine, and a pressing device attached to it directly or indirectly to press the drive wheel against the wheel of the vehicle to be moved so that the moving of the vehicle takes place by rotating its wheel with the drive wheel.

Towing tractors are normally used to move airplanes on airfields and on ramps. They have to be made heavy to be able to tow heavy airplanes. With the size of the planes increasing, the towing vehicles have to be built heavier and equipped with big wheels, efficient brakes, heavy axles etc. This kind of vehicles are clumsy and expensive to run as far as staff expenses are concerned.

Attempts have been made to replace the towing tractor with a smaller and easier-to-operate moving apparatus to move the plane by rotating its wheel. These kinds of apparatuses have been described in e.g. US patent publications 3 005 510 and 3 025 922. The apparatus described in these publications and elsewhere have not, however, come into general use. The problem with all of them is that they cannot be made to operate universally so that they could be attached to any kinds of wheels. For instance the apparatus described in the US patent publication 3 005 510 can only be attached to the landing gear of such an airplane as has a bogie with two wheels at a certain distance from each other. Then the moving apparatus can be placed between these two wheels.

If there is no bogie in the landing gear of the plane, the apparatus cannot be used. The apparatus described in the other of the above mentioned US patent publications 3 025 922 can also be attached to such a landing gear that only has one wheel. The weakness of this apparatus is, however, that it has to be locked to the ends of the axle of the wheel of the plane to enable the drive wheel to be pressed against the wheel of the plane. As the wheels of airplanes are of many sizes and widths, and as the constructions of their axles vary greatly, it is clear that it is impossible to construct an apparatus to fit all the wheels.

DE—A—28 26 161 discloses, according to the preamble of claim 1, a moving apparatus to wheeled vehicles, the drive wheel of which being rotated by a power source. To it is directly or indirectly attached a pressing device, by which the drive wheel is pushed and pressed towards and against a wheel of the wheeled vehicle. To move the vehicle the drive wheel is rotated, which turns by frictional contact the wheel of the wheeled vehicle. The pressing device of the drive wheel comprises two opposite friction wheels, which are connected and placed of a certain distance to each other by a movable connecting member, which is moved to establish frictional contact between the wheel of the wheeled vehicle and the two frictional wheels, of which one serves as drive wheel.

This moving apparatus has to be fixed to the wheeled vehicle to provide an abutment for the forces created on the contact surfaces of the friction or drive wheels of the moving apparatus and the wheel of the wheeled vehicle. That means that the wheeled vehicle has to have a special element to provide the abutment or that loads are induced into another element of the wheeled vehicle. Further a great lot of adapters must be provided, so that the moving apparatus can be combined to various types of wheels or bogies.

It is an object of the present invention to provide a moving apparatus to move a wheeled vehicle which has a large operational range and is usable for nearly all types and magnitudes of wheeled vehicles and which besides the contact surfaces of the friction wheels of the apparatus and the wheel of the wheeled vehicle, does not need to be connected with the wheeled vehicle.

This object is in accordance with the invention achieved by the features of the characterizing portion of claim 1. The contact surfaces are disposed in a manner, that the plurality of contact surfaces serve as their own counter abutments.

At least one of the friction wheels can be moved so that the friction wheels are pressed against different positions of the wheel of the vehicle to be moved, or, for instance, a group of wheels formed by a bogie.

As the moving apparatus according to this invention works so that the wheel to be rotated remains between the friction wheels, it does not have to be supported onto the ends of the axle of the wheel. It is not decisive, either, if there is one wheel or a bogie, as the friction wheels can be pressed against one wheel as well as against all the wheels of a bogie.

On an airfield the moving apparatus according to the invention can be attached to the wheels of an airplane until the moment the plane has taxied to the end of the runway to take off. Thus the plane's own engines need not be used at all to move it on the airfield. This point may have considerable economical importance.

Preferably the moving apparatus is attached to the turning nosewheel of an airplane, which then is made to move on the airfield as a front-wheel-drive car. In this case the control of the moving apparatus can be left to the pilot by connecting the apparatus to the flight deck with cables. In this way the ground crew is not tied to transferring planes on the airfield.

The power source of the moving apparatus can be incorporated in the apparatus itself, but it is possible to attach several moving apparatuses with a common, separate power source to one plane. The moving apparatuses are thus spread across the airfield with the planes, and after being used they can be gathered together again to be attached to other planes.

Further, the apparatus according to the invention may comprise ground wheels attached to the frame of the moving apparatus. At least one of the ground wheels is turning. By means of the turning wheels the moving apparatus can be brought to the wheel or group of wheels of the vehicle to be moved on any side and from any direction. The turning wheel may be freely turning or turnable by means of a control device. It can be arranged so, for instance, that all the wheels of the moving apparatus are freely turning or that all the wheels are turned with a control device. Also part of the wheels can be arranged to be freely turning and part of them turnable with a control device. In addition, also such wheels may be used as do not turn at all. And naturally combinations of all these types of wheels are possible. Preferably the number of ground wheels, however, is three or four. According to one preferable embodiment of the invention the frame of the moving apparatus is open on one side so that the apparatus can, by means of the turning ground wheels, be moved into position from one side of the wheel or the group of wheels formed by a bogie, i.e. parallel with the axle of the wheel or the bogie.

Further advantages of the invention derive from the subclaims. In the following the invention is described with some examples by referring to the attached figures, in which

Figure 1 is a schematic side elevation of a moving apparatus according to the invention to move the nosewheel of an airplane.

Figure 2 is a top plan view of the moving apparatus of Figure 1.

Figure 3 is a schematic side elevation of the moving apparatus of Figure 1, showing the position of the wheels of the moving apparatus in relation to the wheels of the vehicle to be moved.

Figure 4 corresponds to Figure 2 and shows the moving apparatus with the friction wheels turned aside.

Figure 5 is a sectional view, partly taken on line V—V and showing the moving apparatus of Figure 2 from one end.

Figure 6 corresponds to Figure 5 and shows the moving apparatus with the friction wheels turned aside, also corresponding to the fragmentary sectional view of Figure 4 taken on line VI—VI.

Figure 7 is a schematic side elevation of a second embodiment of the moving apparatus.

Figure 8 is a top plan view of the moving apparatus of Figure 7.

Figure 9 is a schematic side elevation of a third embodiment of the moving apparatus.

Figure 10 shows the moving apparatus of Figure 7 attached to a bogie.

Figure 11 is a schematic side elevation of a fourth embodiment of the moving apparatus.

Figure 12 is a schematic side elevation of a fifth embodiment of the moving apparatus.

Figure 13 is a schematic side elevation of a sixth embodiment of the moving apparatus.

Figure 14 shows the forces created in the embodiment of Figure 7.

Figure 15 is a schematic side elvation of a seventh embodiment of the moving apparatus.

Figure 16 is a schematic side elevation of a moving apparatus according to the invention, attached to the nosewheel of an airplane.

Figure 17 is a top plan view of the moving apparatus of Figure 16.

Figure 18 corresponds to Figure 17 and shows a moving apparatus according to the invention next to the nosewheel of an airplane before the apparatus is attached to the wheel of the vehicle to be moved.

Figure 19 is a schematic side elevation of another embodiment of the moving apparatus attached to the bogie of the landing gear of an airplane.

Figure 20 is a top plan view of the moving apparatus of Figure 19 and of a part of the bogie of an airplane.

Figure 21 is an enlarged sectional view of Figure 20 taken on line VI—VI.

Figure 22 is a top plan view of the moving apparatus of Figure 20 attached to the bogie of an airplane as an extension at one end of the vehicle.

Figure 23 is a top plan view of an airplane and a third embodiment of the invention, where moving apparatuses according to the invention are brought near both of the two main landing gears of the plane.

Figure 24 shows a control and feeding device for the hydraulic hose leading to a moving apparatus.

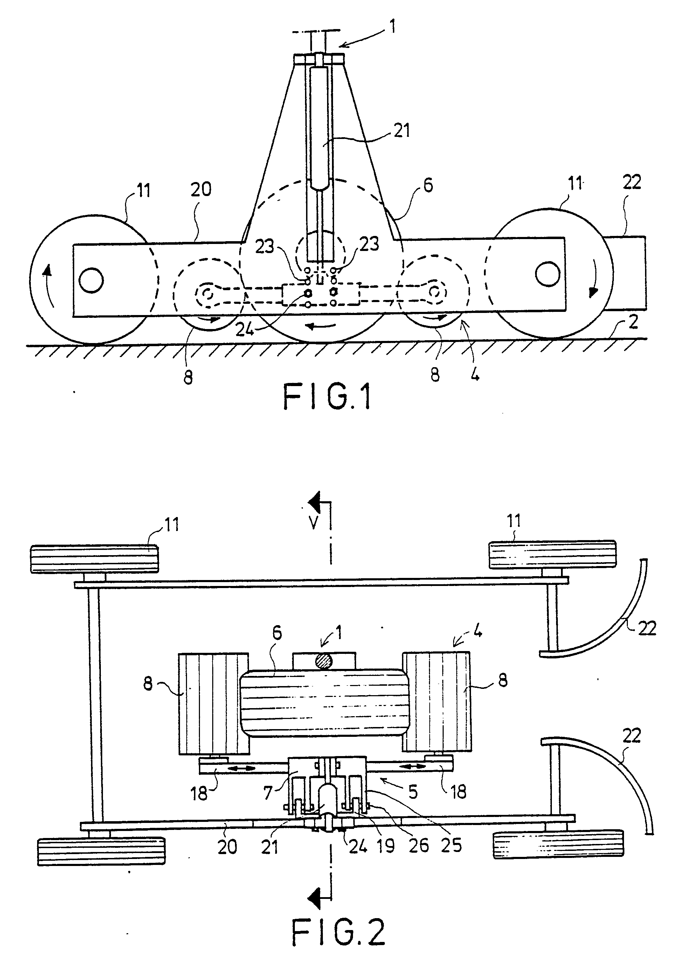

The moving apparatus of Figure 1 consists of friction wheels 8 situated on both sides of the nosewheel 6 of the plane 1, of which friction wheels one is a rotatory drive wheel 4. The friction wheels 8 are attached to the frame 20 of the moving apparatus with connecting members. Freely rotating ground wheels 11 resting on the surface 2 are journalled on the frame. An engine or a motor can also be coupled to one or several of the ground wheels to move the moving apparatus when it is not attached to the wheel 6 of the plane. The following figures show the pressing members between the friction wheels 8 in more detail.

Figure 1, however, shows the lifting cylinder 21 attached to the frame 20. The lifting cylinder is used to turn the friction wheels 8 aside when the moving apparatus is being engaged with the wheel 6 of the airplane or when it is being disengaged from it. Figure 1 also shows the bolt holes 23 in the frame 20. These holes are for bolts 24 that can be used to lock the friction wheels and the pressing piece between them at the desired height. Naturally this height adjustment can be done in many other ways, by means of a hydraulic cylinder, for example.

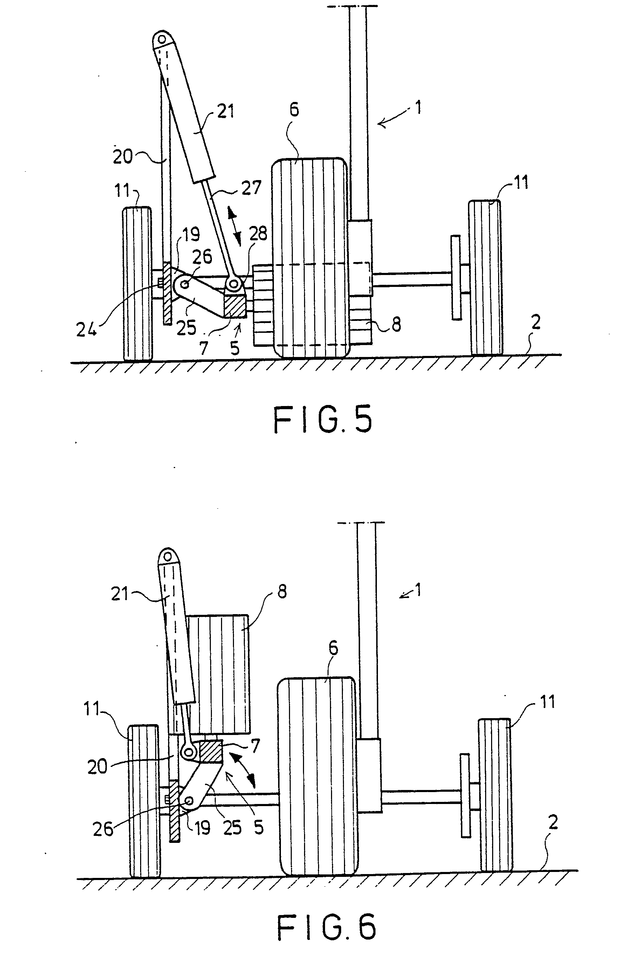

Figure 2 is a top plan view of the moving apparatus of Figure 1. The friction wheels 8 on both sides of the nosewheel 6 of the plane can be pressed against the nosewheel with a pressing device 5. The connecting member 7 in the pressing device can be a hydraulic cylinder, for example, which has movable bars 18 at both ends. The connecting member 7 is attached to a lifting ear 19 by means of ears 25 and hinge pins 26. The lifting ear 19, on the other hand, is fixed at the desired height on the frame 20 with bolts 24, as is shown in Figure 1. The pressing device 5 is turned aside on the hinge pins 26 by means of a lifting cylinder 1. This action is shown in detail in Figures 5 and 6.

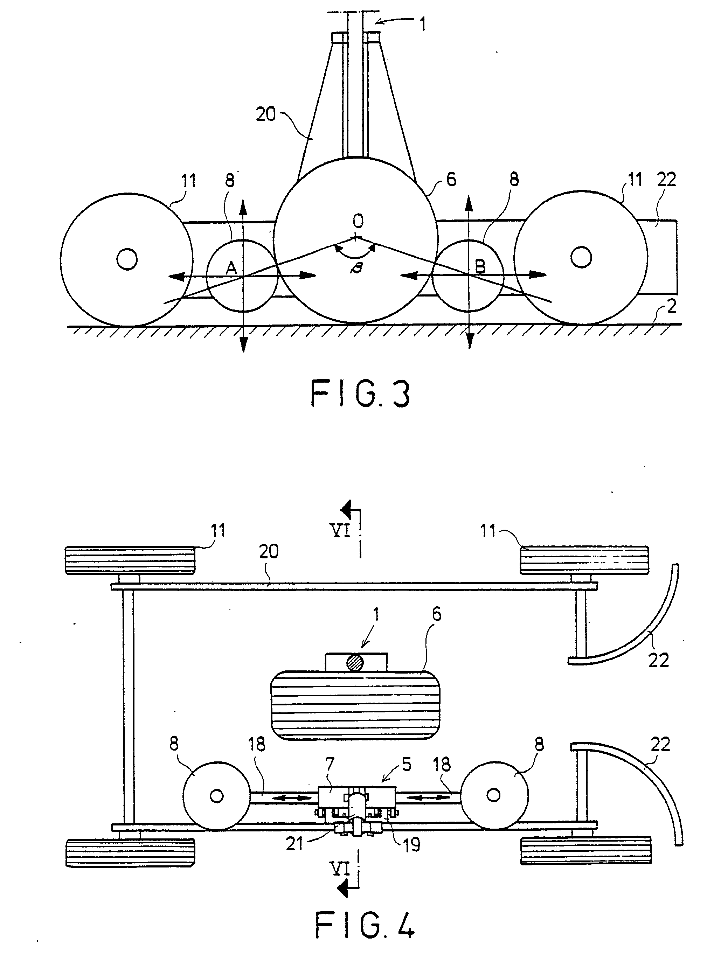

Figure 3 shows the position of the friction wheels 8 of the moving apparatus in Figure 1 in relation to the wheel of the vehicle to be moved, i.e. the nosewheel 6 of an airplane. The position of these wheels in relation to each other is defined by angle β, the sides of which, OA, and OB, are reached by connecting the rotation axles A and B of the friction wheels 8 with the rotation axle 0 of the nosewheel 6. The most favourable value for angle β depends on the circumstances. If this angle is kept constant, it is clear that when the size of the wheel 6 of the vehicle to be moved changes, the location of the friction wheels 8 also changes. In Figure 3 the arrows drawn through the rotation axles A and B of the friction wheels 8 show that the friction wheels can be moved both vertically and horizontally, if necessary. These adjustment possibilities must be independent of each other because the height is mainly determined by the diameter of the wheel 6 of the vehicle to be moved, whereas the distance between the friction wheels depends on whether the vehicle to be moved has one wheel or a bogie.

Figure 4 shows the moving apparatus of Figure 2 with friction wheels 8 turned aside. This position of the moving apparatus is for engaging the apparatus with and disengaging it from the wheel of the equipment to be moved. In this position the moving apparatus can be moved in relation to the nosewheel 6 of the airplane so that there is enough space for the nosewheel 6 to go between the guiding flanges 22 and away from the moving apparatus.

Figure 5 is a sectional view, partly taken on line V—V, showing the moving apparatus of Figure 2 from one end. The nosewheel 6 of the airplane 1 is inside the frame 20 of the moving apparatus between the friction wheels 8. The friction wheels 8 can be pressed against the nosewheel 6 by means of the hydraulic cylinder 7 of the pressing device 5, as was shown in the previous figures. The friction wheels 8 are lifted aside by means of a lifting cylinder 21. The piston rod 27 of this cylinder is attached to an ear 28 on top of the pressing device 5. Another ear 25 pointing to one side is attached to the lifting ear 19 by means of a hinge pin 26. The lifting ear is fixed to the frame 20 of the moving apparatus at the desired height by means of bolts 24. The pressing device is turned aside on the hinge pin 26. Figure 6 shows the pressing device turned aside, in which position the moving device can be disengaged from the nosewheel 6.

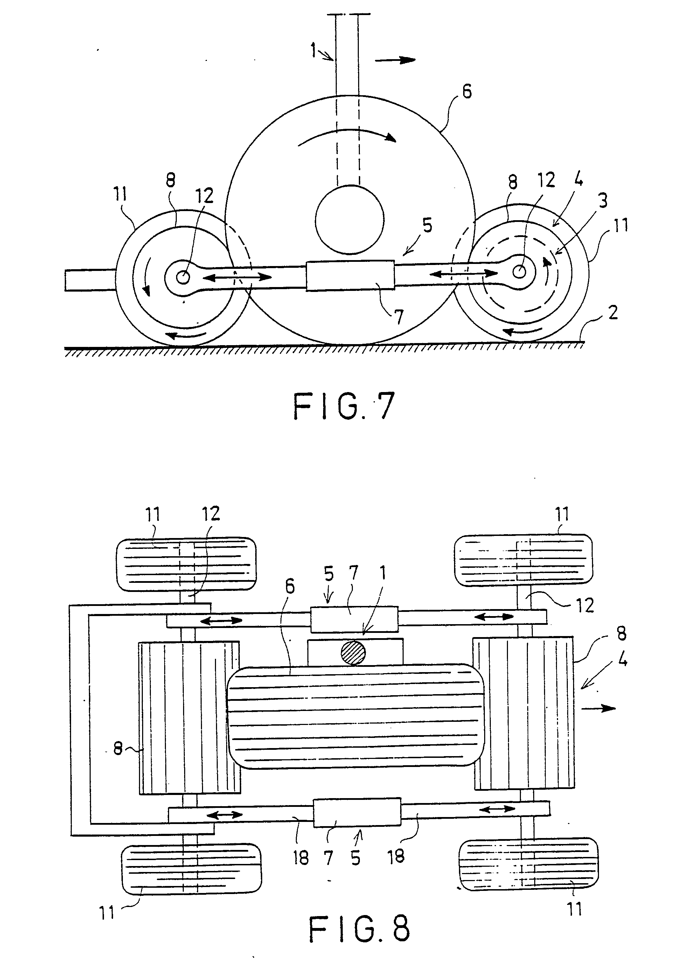

The moving apparatus of Figure 7 has friction wheels 8 on both sides of the nosewheel 6 of the airplane 1, and the axles of the friction wheels are fixed to the pressing device 5. In this embodiment the freely rotating ground wheels 11, which are slightly larger than the friction wheels 8, are journalled on the same axles 12 with the friction wheels. The pressing device 5 includes a connecting member 7 which can be a hydraulic cylinder and which can be used to move the friction wheels 8 towards each other. In this way the friction wheels 8 are pressed against the nosewheel 6 of the airplane. In this embodiment the right hand side friction wheel 8 in the figure is made into a drive wheel 4, inside which there is an electric motor 3, for example. The motor is shown only diagrammatically in dotted lines, as the power source can also be a hydraulic motor, for example. The motor rotates the drive wheel 4 which is pressed against the nosewheel 6. In Figure 7 the rotational motion is, for instance, counterclockwise, which makes the nosewheel 6 rotate clockwise and the friction wheel 8 on the opposite side counterclockwise. The axle 12 of the drive wheel 4 is naturally locked onto the frame of the pressing device 5 to transfer the torque of the drive wheel 4 motor 3 to the nosewheel 6 of the airplane. As the ground wheels 11 rotate freely, the rotational motions described above make the nosewheel 6 of the airplane and the moving apparatus attached to it move to the right in the figure.

Figure 8 is a top plan view of the moving apparatus of Figure 7 and the nosewheel of an airplane. The friction wheels 8 are on both sides of the nosewheel 6, and the friction wheel on the right is made into a drive wheel 4. The axles 12 of the friction wheels 8 are fixed to the bars 18 of the pressing device 5. The friction wheels 8 can be moved towards each other by means of the connecting members 7 so that the nosewheel 6 is pressed between the friction wheels. In this embodiment freely rotating ground wheels 11 are journalled on the extensions of the axles 12 of the friction wheels.

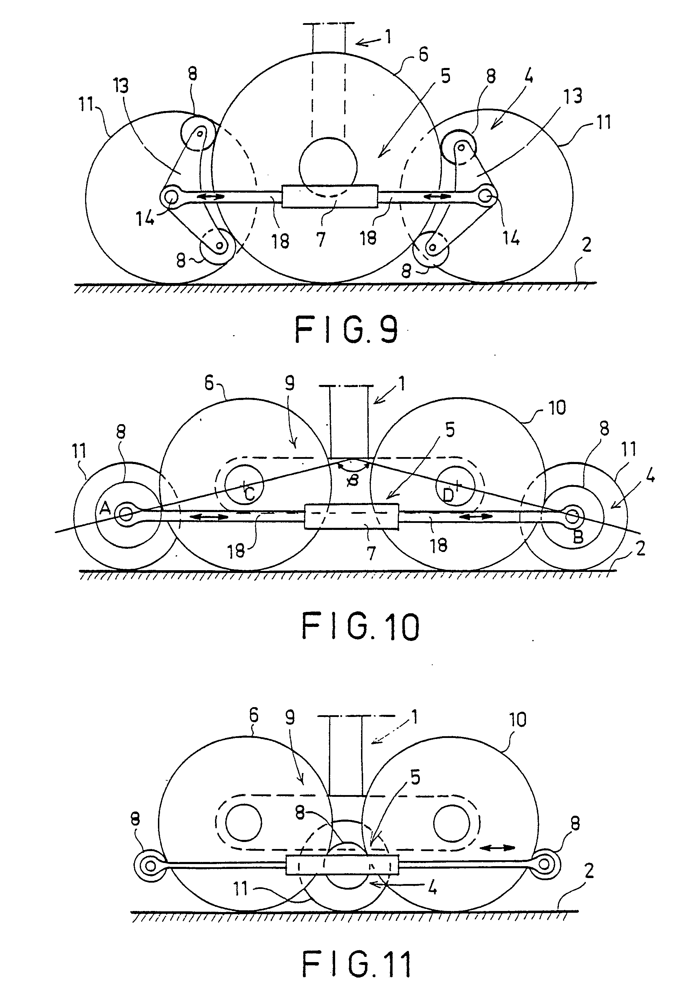

Figure 9 shows an embodiment of the moving apparatus in which the friction wheels on both sides of the nosewheel 6 of an airplane 1 are replaced by pressing members 13 with two friction wheels 8 journalled on them. Any one or several of these friction wheels can be made into drive wheels 4 that cause the rotational motion. The pressing members 13 in the figure are connected with each other by means of connecting members 7, which are used to move the pressing members 13 towards each other. In this embodiment the pressing members 13 and the bars 18 of the connecting members 7 are attached to the axles of the freely rotating ground wheels 11 with pivot hinges 14. The connecting member 7 can also be one in which the pressure is caused by moving the connecting member towards the axle of the vehicle to be moved. Instead of one nosewheel 6 there can also be a bogie.

In the embodiment of Figure 10 the landing gear of an airplane 1 consists of a bogie 9 and wheels 6 and 10 attached to it. The friction wheels 8 of the moving apparatus are placed to be pressed against both the wheels of the landing gear at the same time. The bars 18 of the connecting member 7 belonging to the pressing device 5 are only much longer than they are in the embodiment of Figure 7. Otherwise this embodiment is identical with the one in Figure 7.

Figure 11 shows an embodiment in which a moving apparatus, provided with three friction wheels 8 is attached to the landing gear of an airplane with a bogie 9. The friction wheel in the middle is made into a drive wheel 4, and freely rotating ground wheels 11 are journalled on the same axle. In addition to the driving wheel 4 only one of the other two friction wheels 8 can operate as an actual friction wheel, while the third friction wheel can serve as the supporting wheel receiving the torque.

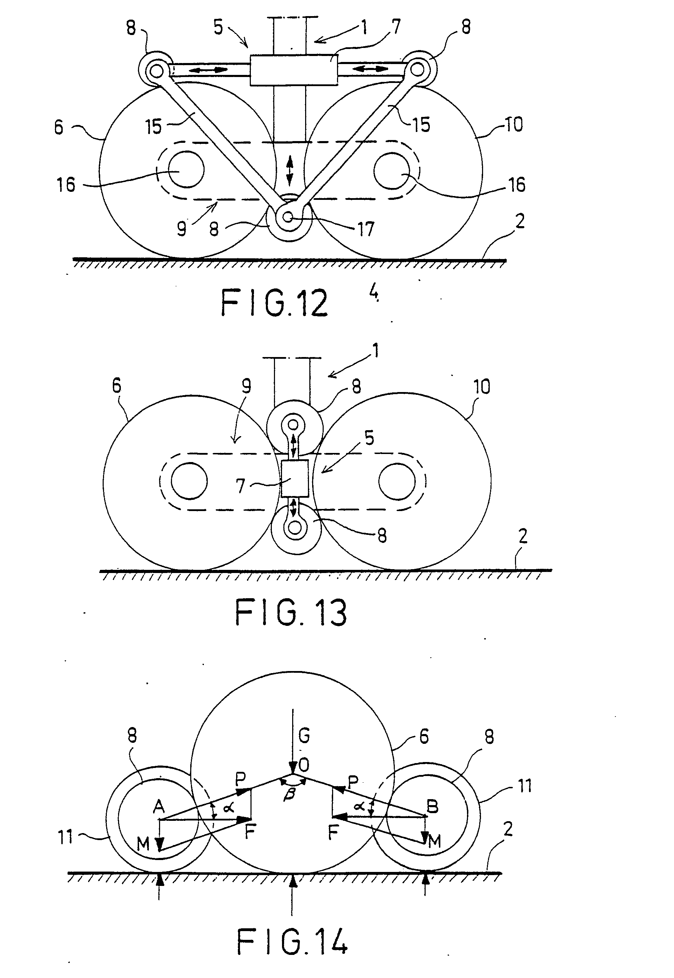

Figure 12 shows a moving apparatus with three friction wheels. Two connecting pieces 15 forming an angle are journalled on the axle 17 of the middle friction wheel, and two friction wheels are journalled on the other ends of these connecting pieces 15. In this embodiment the friction wheels do not move towards each other as in the previous examples. To create pressing force it is essential that the distance between the friction wheels 8 at the ends of the connecting pieces 15 is smaller than the diameter of the wheel of the airplane. The pressing force is created by moving the connecting piece 15 towards the axle 16 of the wheel of the airplane. This is done by forming a triangular structure with the connecting pieces 15 and the connecting member 7. Cf. Figure 6. In this case the friction wheels 8 on the ends of the connecting member 7 are pushed away from each other, which makes the connecting pieces 15 move towards the centers 16 of the wheels 6 and 10 of the airplane and then the friction wheels 8 are pressed against the wheels of the airplane. Preferably the friction wheel 8 between the connecting pieces 15 is made into a drive wheel 4.

Figure 13 shows yet another embodiment of the invention in which the diameter of the friction wheels 8 is bigger than the distance between the wheels 6 and 10 in the bogie 9 of the airplane. In this case the friction wheels 8 are pressed against the wheels of the plane by moving the friction wheels towards each other by means of a connecting member 7.

Figure 14 shows diagrammatically the forces created in Figure 7. When the friction wheels 8 are pushed towards each other with force F they are pressed against the wheels 6 of the airplane on two sides, and then vertical force components P are formed against the surface of the wheels 6 and 10, and force components M from the ground wheels 11 are formed against the surface 2. The figure shows that when the angle α between vectors P and F grows, the pressing force P between wheels 6 and 10 grows in relation to force F directed against the friction wheels. In this case the friction wheels 8 as if wedge under the wheel 6 of the airplane, which makes the supporting force component M between the ground wheels 11 and the ground grow, in other words, the moving apparatus takes some of the weight of the airplane. To ensure proper functioning of the moving apparatus the center angle β should preferably be 90°—180°. When defining whether the friction wheels 8 are on different sides of the wheel 6 of the airplane, a minimum of 90° is a guiding value for angle α. In the case of a bogie structure the angle can be defined by means of lines AC and BD going through the axles of the wheels of the airplane and the axles of the friction wheels, as is shown in Figure 10. In general angle β must be smaller than 180° to ensure the proper functioning of the moving apparatus, as the torque of the drive wheel 4 tends to disengage the friction wheels 8 from the wheel 6 of the vehicle to be moved. An exception perhaps is the embodiment of Figure 9.

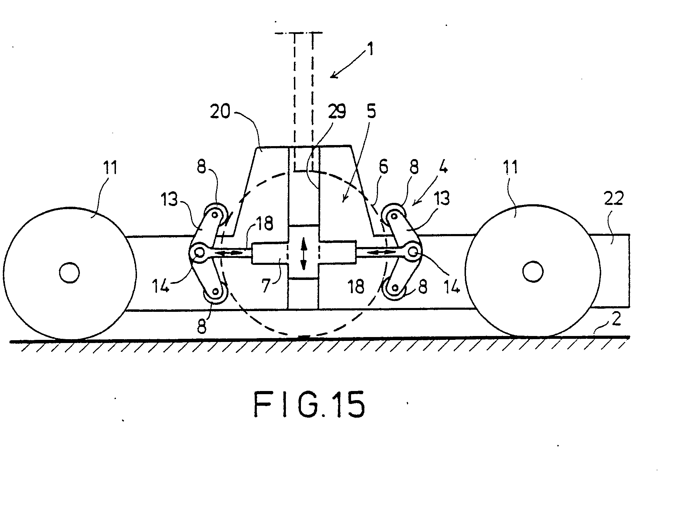

Figure 15 shows a seventh embodiment of the moving apparatus according to the invention. In this case there is a pressing device 5 moving on vertical slide bars 29 attached to a frame 20 equipped with ground wheels 11. With help of the slide bar the connecting member 7, which works as a slide, can always be lifted to a suitable height. Preferably the bars 18 of the hydraulic cylinder of the connecting member 7 are at the same height as the axle of the driven wheel 6 when pressure is applied. Then the pressing members 13, together with the friction wheels 8, attached to the bars 18 with pivot hinges 14 are symmetrically located on both sides of the wheel 6 of the vehicle to be moved. The height of the connecting member 7 can be adjusted manually or by some kind of a mechanism. It is also possible to make the connecting member 7 selfcentering. In this case the pressing members 13 have to be fixed on the bars 18 without pivot hinges 14. Any one or several of the friction wheels 8 can be made into a drive wheel.

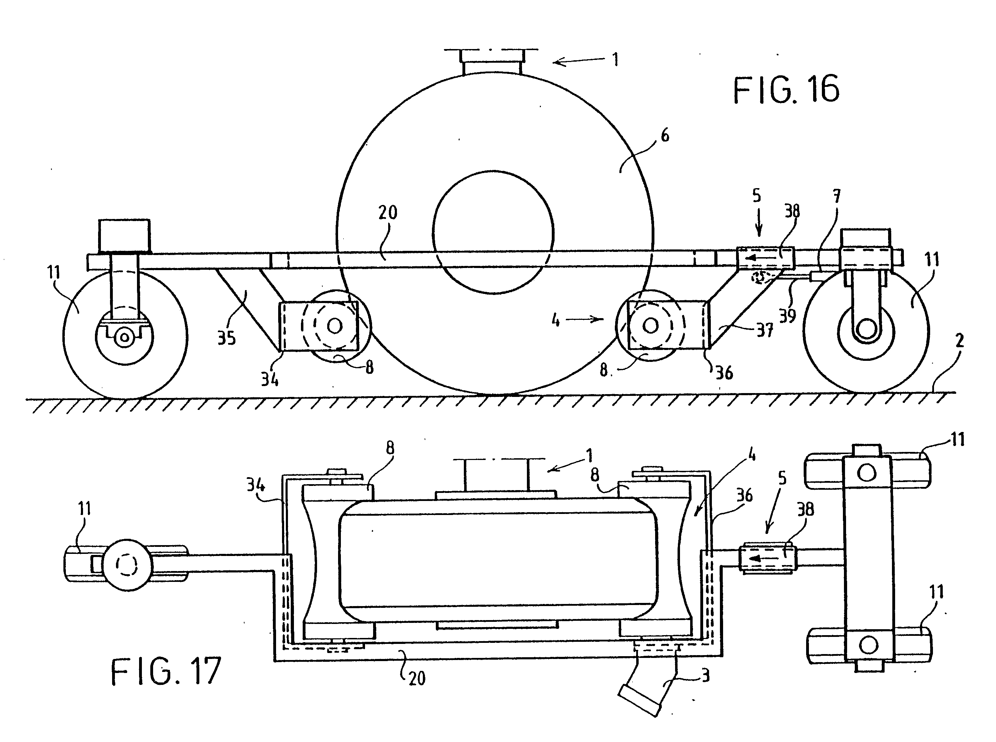

The moving apparatus shown in Figures 16 and 17 is designed to move an airplane on an airfield. In the figure only part of the landing gear and the wheel 6 of the airplane are shown. The moving apparatus is in an operational position attached to the wheel 6 so that the friction wheels 8 are on both sides of the wheel 6, pressing it between themselves. In the figure the left hand side friction wheel 8 is fixed to the frame 20 of the moving apparatus by means of a connecting bar 35 which is attached to the supporter 34 of the friction wheel 8. The right hand side friction wheel 8 is horizontally movable to create pressing force. This is done so that the supporting bracket 36 of this friction wheel 8 is attached to a sleeve 38 by means of a connecting bar 37. The sleeve 38 works as a slide on the slide bar which is part of the frame 20. The slide is moved by means of a hydraulic cylinder 7 which is attached to the frame 20. The end of the piston rod 39 of the cylinder is attached to the connecting bar 37 underneath the sleeve 38. The right hand side friction wheel 8 also works as a drive wheel 4 to rotate the wheel 6 of the airplane, as it itself is rotated by a hydraulic motor 3.

According to the invention the moving apparatus shown in Figures 16 and 17 is equipped with turning ground wheels 11. In this example there are three ground wheels and they are all freely turning. In this way the moving apparatus can move and turn in any direction and even turn round any vertical axle. These movements are naturally possible only if the moving apparatus is disengaged from the vehicle to be moved. When attached to the wheel of the vehicle to be moved, the rotation direction of this wheel determines the movement of the moving apparatus.

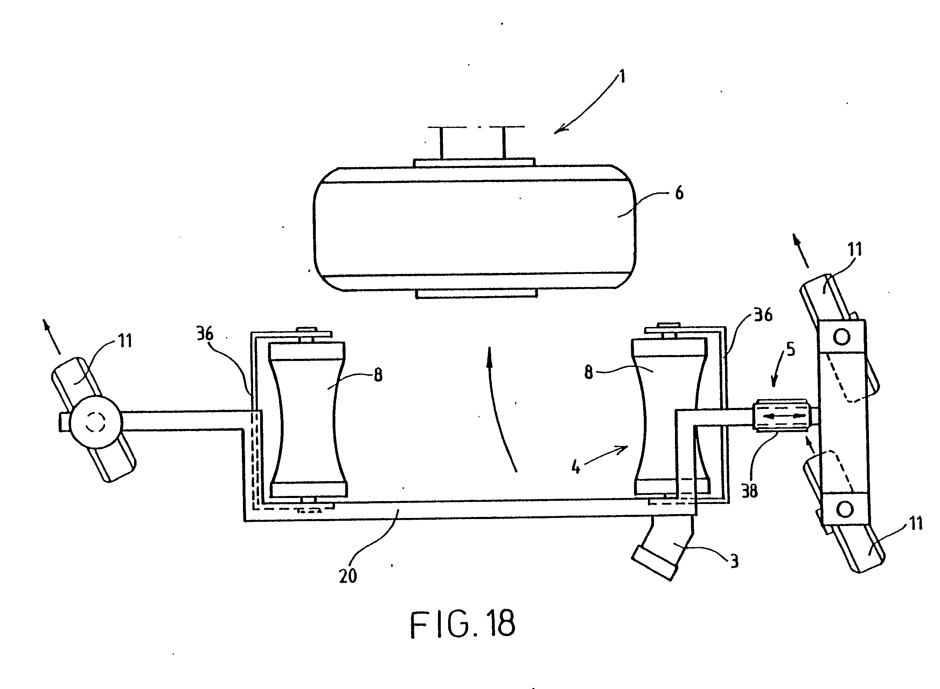

Figure 18 shows the moving apparatus of Figures 16 and 17 disengaged from the wheel 6 of the vehicle to be moved. This is the position when the moving apparatus is being attached to the wheel of the vehicle to be moved.

The figure shows the shape of the tubular frame 20 of the moving apparatus with a structure open on one side. In this way the moving apparatus can simply approach the wheel 6 of the vehicle to be moved from the side. In the figure the sliding sleeve 38 is moved to the extreme right, allowing the wheel 6 of the airplane 1 to go between the friction wheels 8. The freely turning ground wheels 11 are turned almost 90°. As the ground wheels 11 are freely turning, the moving apparatus has to be moved by means of a device. This is not shown in these figures. Another possibility is that there are motors rotating the ground wheels and that the wheels are turned by means of a control device.

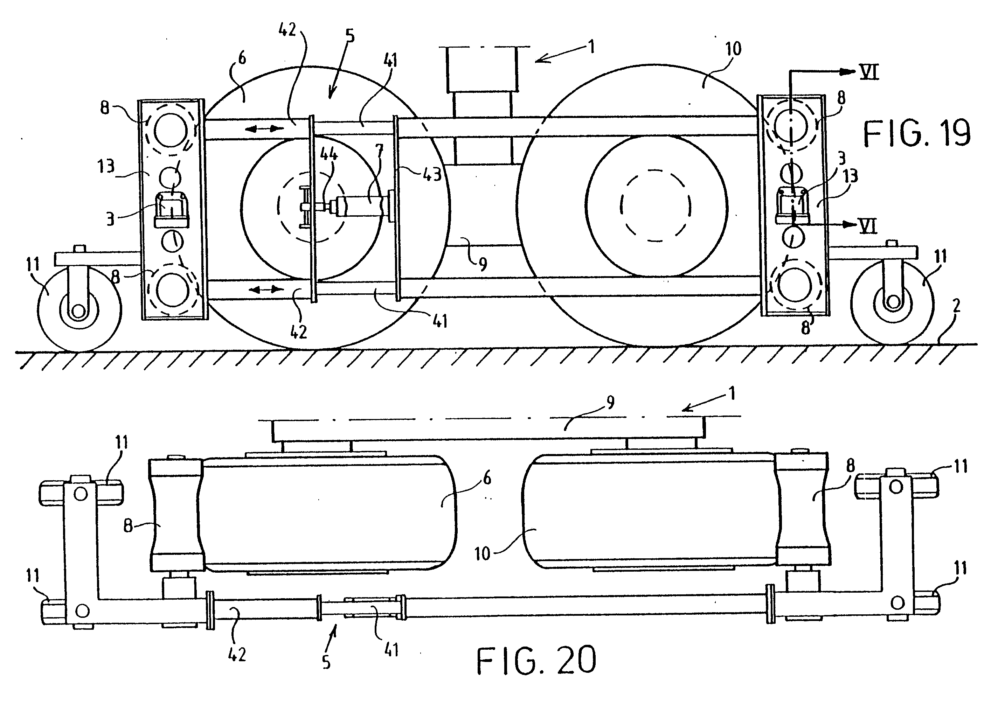

Figure 19 shows part of a landing gear of an airplane 1, consisting of a bogie 9 and wheels 6 and 10. Another embodiment of the moving apparatus is attached to the wheels. In this embodiment the pressing member 13 consists of two gears, both equipped with two friction wheels 8 each. The pressing force is created by connecting the gears with slide bars 41 and tubes 42 sliding on them. In the figure the slide bars 41 are attached to the right hand side gear 13 and the tubes 42 are attached to the left hand side gear. There is a hydraulic cylinder 7 attached to the bar 43 connecting the slide bars 41, and the piston 44 of the cylinder is attached to the bar 45 connecting the tubes 42 attached to the left hand side gear 13. The advantage of this construction is that the gears 13 stay parallel during the pressing movement, which makes the four friction wheels 8 press symmetrically against the wheels 6 and 10 of the bogie 9.

Figure 20 is a top plan view of the moving apparatus of Figure 19. The structure of this embodiment is open on one side, too, which makes it possible to push the moving apparatus to the wheel from the side.

Figures 19 and 20 do not show the frame of the moving apparatus, nor do they show the ground wheels. To simplify the figure also the device to adjust the height of the pressing device is left out in Figures 19 and 20.

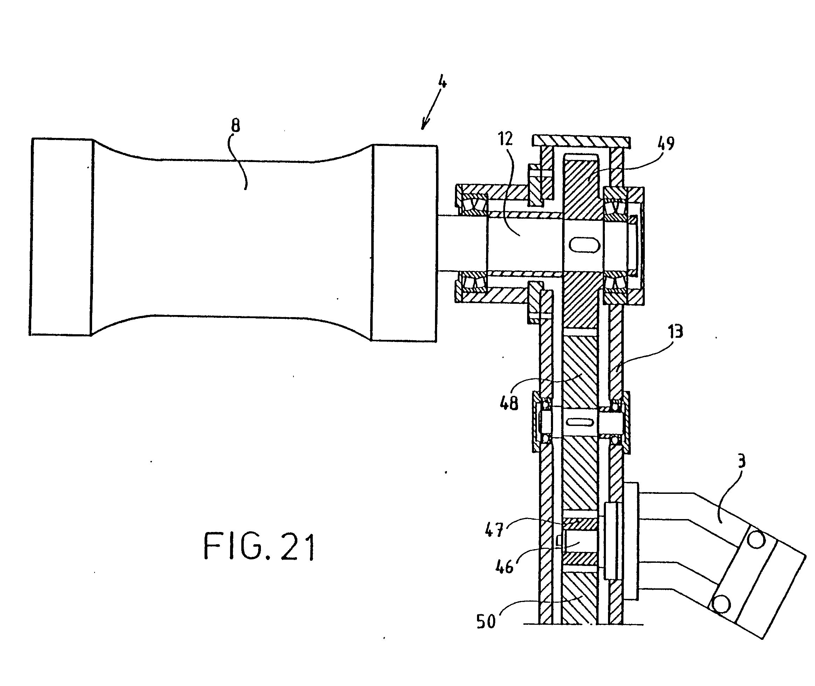

Figure 21 is a fragmentary sectional view of the right hand side gear of the moving apparatus of Figure 19. This figure also shows a hydraulic motor 3 rotating the friction wheels 8. There is a cogwheel 47 attached to the shaft 46 of the hydraulic motor. The rotating motion of the engine 3 is transmitted through this cogwheel 47 to an intermediate cogwheel 48 and further to the cogwheel 49 attached to the axle 12 of the friction wheel 8.

Symmetrically underneath the hydraulic motor 3 there is another similar transmission system, as the cogwheel 47 attached to the shaft 46 of the motor also rotates another intermediate cogwheel 50 underneath it. The structure of the gears is not shown in more detail in Figure 21, but at the lower end of the gear there is a similar friction wheel which rotates in the same direction and at the same speed as the friction wheel 8 shown at the upper end of the gear.

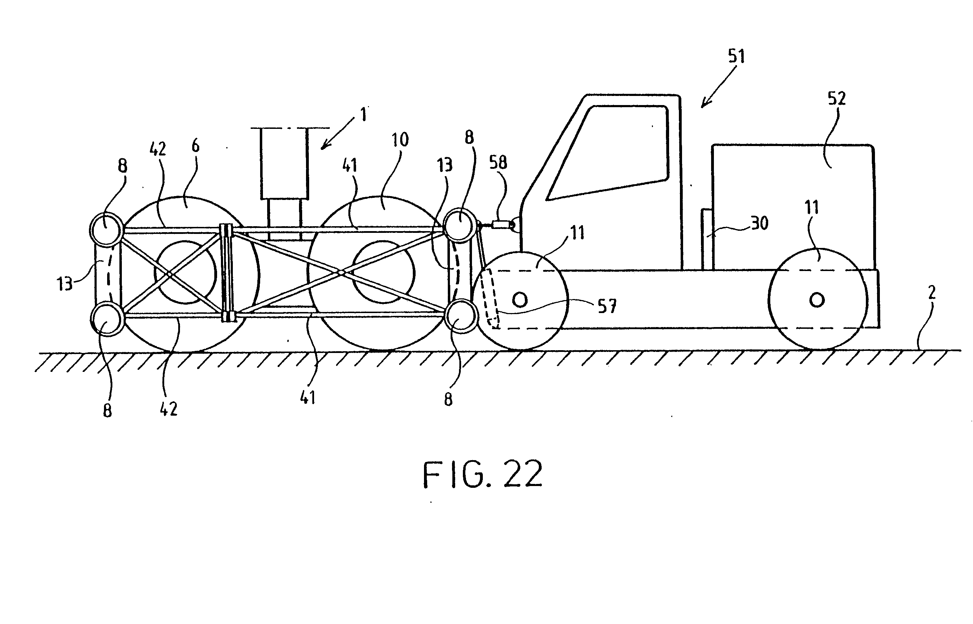

Figure 22 shows the moving apparatus of Figure 19 together with a vehicle 51 which provides the moving apparatus with a power source, such as a combustion engine 52 and a hydraulic pump 30. This figure does not show the hydraulic motors rotating the friction wheels 8 of the gears 13. When moving an airplane 1 the apparatus functions as is explained in Figure 19. When the moving apparatus is not attached to any vehicle to be moved, the vehicle 51 can be moved by making one of the friction wheels 8 of the moving apparatus rotate the wheel 11 of the vehicle. When the moving apparatus is being attached to the wheels 6 and 10 of the vehicle to be moved, the height of the moving apparatus is adjusted by means of hydraulic cylinders 57 and 58.

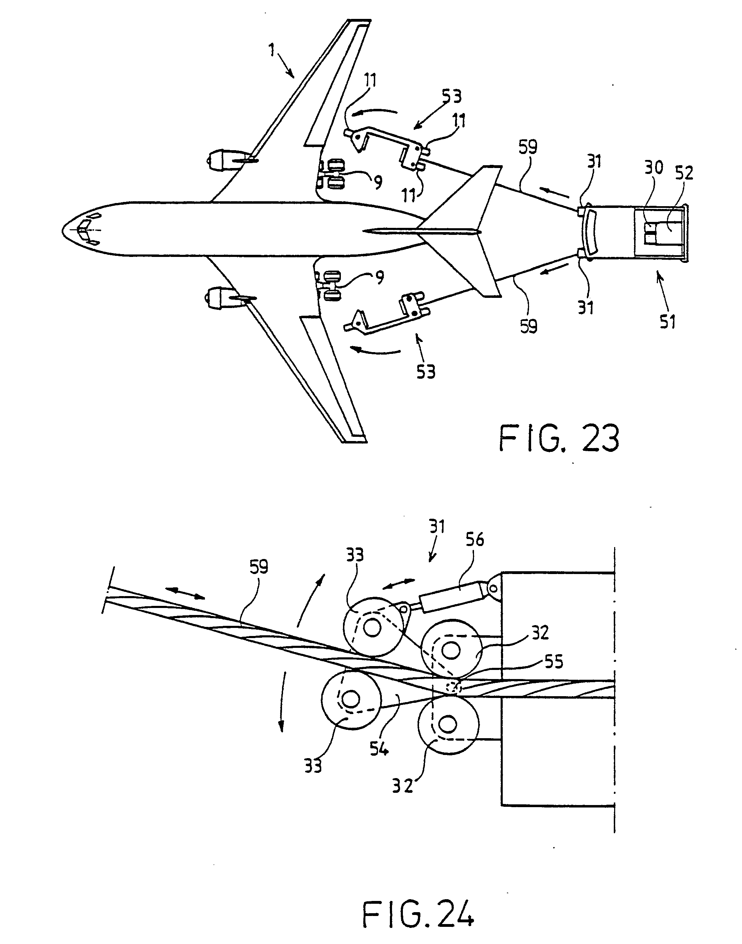

Figure 23 is a top plan view of a situation where a moving apparatus according to the third embodiment of the invention is brought near an airplane 1 to move it. This moving apparatus system consists of a vehicle 51 with e.g. a hydraulic pump 30 operated by a combustion engine 52 and two moving apparatuses 53. The moving apparatuses 53 are connected to the hydraulic pump 30 of the transport vehicle 51 by means of hydraulic hoses 59.

The moving apparatuses 53 can be brought to the main landing gear 9 of the airplane 1 and attached to the wheels of the landing gear 9 in many ways. If the apparatuses are sufficiently light, human power can be used, but with heavier apparatuses the operations have to be mechanized. The transportation vehicle 51 may push the moving apparatuses 53 in position or the moving apparatuses can be equipped with motors that rotate their ground wheels 11. In both cases the ground wheels 11 must be turning, in the former case freely turning, and in the latter case turnable by means of a control device. The whole system can be built to be operated through remote control.

In the embodiment of Figure 23 the moving apparatuses 53 are pushed to the bogie 9 of the landing gear of the airplane 1 by means of hydraulic hoses 59 which are sufficiently stiff to be used in that way when distances are short. The pushing is done by feeding the hydraulic hose 59 from a reel through a feeding device 31 in the front of the transportation vehicle 51. The feeding device 31 can also serve as a steering device so that the hydraulic hose 59 is turned left or right to turn the moving apparatus 53. In this case the ground wheels 11 of the moving apparatus 53 have to be freely turning.

Figure 24 shows the structure of the steering and feeding devices 31 of the hydraulic hose 59 in the front of the transportation vehicle 51 of Figure 23. The steering and feeding device 31 consists of two pairs of rollers between which the hydraulic hose 59 is made to go. There are feeding rollers 32 to feed the hydraulic hose 59, and bending rollers 33 to steer it. The hose is bent by bending rollers 33 journalled on the bending piece 54, which is made to turn sideways on a vertical hinge 55. The steering of the bending piece 54, i.e. the side movement of the hydraulic hose 29, which steers the moving apparatus 53, is controlled by means of a hydraulic cylinder 56.

It is evident to a professional in this field that the various embodiments of the invention can vary within the patent claims that follow. It is not essential how the drive wheel 4 is driven. It can have an electric motor 3 or a hydraulic motor but an outside mechanical power transmission is also possible. It is not essential, either, what the structure of the connecting member 7 of the pressing device 5 is. In the embodiments shown, a hydraulic cylinder has been mentioned, but any kind of a mechanical member can also be used.

It is an essential feature of the invention there there are at least two friction wheels 8. According to the invention a friction wheel 8 can also be made into a drive wheel 4. In this case ground wheels 11 are not necessary as the wheel or the group of wheels of the vehicle to be moved are rotated by means of the friction wheels. The ground wheels 11 can be used to move the moving apparatus when it is disengaged from the vehicle to be moved. Turning ground wheels are also an essential feature of the moving apparatus. Turning wheels together with a frame that is open on one side enable the moving apparatus to be attached to the wheel or group of wheels formed by a bogie of the vehicle to be moved from one side. This provides an easy-to-use moving apparatus which can be operated through a remote control system.

## Claims

1. A moving apparatus to move a wheeled vehicle (1), e.g. motor vehicle, trailer or airplane on a surface (2), e.g. ground, road, airfield, floor of a building, loading platform, back of a truck or railway truck, the apparatus comprising at least one drive wheel (4) rotated by a power source (3) and a pressing device (5) directly or indirectly attached to it to press said drive wheel (4) against a wheel (6) of said vehicle (1) to be moved, the moving of said vehicle (1) taking place by rotating its wheel (6) by said drive wheel (4), said pressing device (5) of said drive wheel (4) including at least two opposite friction wheels (8) which are connected with connecting members (7) and placed at a distance from each other, said friction wheels being positioned on different positions of said wheel (6) of said vehicle (1) to be moved or on different sides of a group of wheels (6, 10) formed by a bogie (9), and of which friction wheels (8) at least one being movable by means of said connecting members (7) so that said friction wheels (8) are pressed against said wheel (6) or group of wheels (6, 10) of said vehicle (1) to be moved, and of which friction wheels at least one being said drive wheel (4) rotated by said power source characterized in that said at least two friction wheels (8) of said pressing device (5) are relatively movably connected to each other by means of said connecting member (7), by which the distance between said friction wheels (8) is reduced or increased.

2. The moving apparatus according to claim 1, characterized in that there are at least two friction wheels (8) in the pressing device (5), positioned on different sides of the wheels (6) or group of wheels (6 and 10) of the vehicle to be moved and connected with each other by means of a connecting piece (15) so that the distance between these friction wheels is constant and smaller than the diameter of the wheel or group of wheels of the vehicle to be moved, and that the friction wheels (8) can be pressed against the wheel or group of wheels remaining between them by moving the connecting piece (15) towards the axle (16) of the wheel or the axles of the wheels of the vehicle to be moved.

3. The moving apparatus according to any one of claims 1 or 2, characterized in that the pressing device (5) consists of pressing members (13) positioned on both sides of the wheel (6) or group of wheels (6 and 10) of the vehicle (1) to be moved, which pressing members have at least two friction wheels (8) each, attached to them, and which pressing members (13) can be pressed against the wheel or group of wheels of the vehicle to be moved.

4. The moving apparatus according to claim 3, characterized in that there is a connecting member (7) attached to the pressing members (13) by means of pivot hinges (14) and placed between friction wheels (8), by means of which connecting member (7) the pressing members can be moved towards each other.

5. The moving apparatus according to claim 3, characterized in that the pressing members (13) are connected to each other with connecting pieces which can be moved towards the axle of the wheel (6) or the axles of the group of wheels (6 and 10) of the vehicle (1) to be moved.

6. The moving apparatus according to claim 1 or 2, characterized in that the pressing device (5) consists of a double pressing device formed by three friction wheels (8), which device can be attached to a bogie (9) formed by at least two wheels (6 and 10) of the vehicle (1) to be moved, and which three friction wheels are attached to each other by means of connecting pieces (15) so that the axle (17) of the common friction wheel or its extension forms the joint between the two connecting pieces forming an angle, and that there is a connecting member (7) attached between the other two friction wheels to move them away from each other.

7. The moving apparatus according to claim 1, characterized in that the pressing device (5) consists of two friction wheels (8), which, by means of connecting members (7), can be moved towards each other, and which pressing device can be moved between the two wheels (6 and 10) of the bogie (9) of the vehicle (1) to be moved so that both the friction wheels are supported by the two wheels of the vehicle to be moved.

8. The moving apparatus according to any of claims 1 to 7, characterized in that the friction wheels (8) can be turned aside when the moving apparatus is being engaged with or disengaged from the vehicle (1) to be moved.

9. The moving apparatus according to any of claims 1 to 8, characterized in that the pressing forces (P) of the friction wheels (8) directed against the wheel (6) or group of wheels (6 and 10) of the vehicle (1) to be moved form an angle (β), which is preferably 90°—180°.

10. The moving apparatus according to any one of claims 1 to 9, to move a wheeled vehicle (1) on a surface (2), which vehicle is e.g. a motor vehicle, trailer, or airplane on an airfield, and the surface is e.g. ground, road, airfield, floor of a building, loading platform, back of a truck or railway truck, which moving apparatus consists of a frame (20), a drive wheel (4) rotated by a motor (3) and a pressing device (5) directly or indirectly attached to it to press the drive wheel (4) against the wheel (6) of the vehicle to be moved so that the vehicle is moved by rotating its wheel (6) by means of the drive wheel, and the pressing device (5) of which moving apparatus includes at least two friction wheels (8) connected to each other with connecting members (7), of which friction wheels at least one is a drive wheel rotated by a motor (3), and of which friction wheels at least one can be moved by means of connecting members so that the friction wheels are pressed on different sides against the wheel (6) or group of wheels (6 and 10) formed by a bogie (9) of the vehicle to be moved, characterized in that the moving apparatus includes at least one ground wheel (11) attached to its frame (20) and resting on the surface (2).

11. The moving apparatus according to claim 10, characterized in that the ground wheel (11) is freely rotating at least while the moving apparatus is being moved.

12. The moving apparatus according to claim 10 or 11, characterized in that at least one ground wheel (11) can be rotated by means of a motor or a similar power source at least when the moving apparatus is not attached to the vehicle (1) to be moved.

13. The moving apparatus according to claim 10, 11 or 12, characterized in that the moving apparatus consists of·a frame (20) equipped with four ground wheels (11), to which frame the pressing device (5) and the friction wheels (8) belonging to it are attached.

14. The moving apparatus according to any one of claims 10 to 13, characterized in that the ground wheel (11) resting on the surface (2) is attached to the friction wheel (8) for example so that the ground wheel is journalled on the axle (12) of the friction wheel or on its extension.

15. The moving apparatus according to any one of claims 10 to 14, characterized in that the pressing device (5) consists of two friction wheels (8) on different sides of the wheel (6) or group of wheels (6 and 10) of the vehicle (1) to be moved, on the axles (12) of which are journalled ground wheels (11) resting on the surface (2), and that the connecting member (7) moving the friction wheels towards each other is attached to the axles of the friction wheels or to their extensions.

16. The moving apparatus according to any one of claims 10 to 14, characterized in that on the pressing members (13) there are ground wheels (11) resting on the surface (2) and journalled an the axle of the pivot hinge (14) or its extension between the friction wheels (8).

17. The moving apparatus according to any one of claims 10 to 16, characterized in that at least one of the ground wheels (11) attached to the frame (20) of the moving apparatus and resting on the surface (2) is turning.

18. The moving apparatus according to claim 17, characterized in that at least one of the ground wheels (11) resting on the surface (2) is freely turning.

19. The moving apparatus according to claim 17 or 18, characterized in that at least one of the ground wheels (11) resting on the surface (2) is turnable to steer the moving apparatus.

20. The moving apparatus according to any one of claims 17 to 19, characterized in that all the ground wheels (11) attached to the frame (20) and resting on the surface (2) are turning and that the preferable number of ground wheels is three or four.

21. The moving apparatus according to any one of claims 10 to 20, characterized in that the frame (20) of the moving apparatus is open on one side so that the moving apparatus can approach, by means of the turning ground wheels, the wheel (6) or group of wheels (6 and 10) formed with a bogie (9) of the vehicle (1) to be moved from the side i.e. parallel with the axle of the wheel (16).

22. The moving apparatus according to claim 21, characterized in that the frame (20) of the moving apparatus consists of a U-shaped tube or bar, which allows the wheel (6) or group of wheels (6 and 10) through at one end, and that the extension of at least one end of the tube or bar provides a sliding bar for a sleeve (38) to which a friction wheel (8) is attached and which friction wheel (8) can be moved towards the wheel of the vehicle to be moved.

23. The moving apparatus according to any one of claims 1 to 22, characterized in that the pressing device (5) of the moving apparatus is open on one side so that the pressing members (13) on different sides of the wheel (6) or group of wheels (6 and 10) of the vehicle (1) to be moved are gears, to which at least two friction wheels (8) rotated by means of a motor (3) are attached.

24. The moving apparatus according to claim 23, characterized in that the gears serving as pressing members (13) and equipped with friction wheels (8) are connected to each other with slide bars, by means of which the pressing members can be moved towards each other so that the wheels (6) or group of wheels (6 and 10) of the vehicle (1) to be moved are pressed at least by four friction wheels (8).

25. The moving apparatus according to claim 23, 24 or 25, characterized in that the gears serving as pressing members (13) can be raised to a suitable height according to the size of the wheel (6) of the vehicle to be moved, so that the lower friction wheels (8) and the higher friction wheels (8) are vertically equally far from the axle (16) of the vehicle to be moved.

26. The moving apparatus according to claim 23, 24 or 25, characterized in that the pressing device (5) consisting of two gears (13) is attached to a vehicle (51) equipped with wheels (11) or a similar device at one end so that the pressing device forms an extension to the vehicle.

27. The moving apparatus according to claim 26, characterized in that at least one of the wheels (11) of the transportation vehicle (51) is in frictional contact with at least one friction wheel (8) of the pressing device (13) so that also the transportation vehicle (51) can be moved by rotating the friction wheel.

28. The moving apparatus according to any one of claims 1 to 27, characterized in that the pressing device (5) of the moving apparatus is equippped with at least one friction wheel (8) rotated by a hydraulic motor (3), which hydraulic motor receives pressurized hydraulic fluid from a separate hydraulic pump (30), and that the actual moving apparatus is brought to the wheel (6) or group of wheels (6 and 10) of the vehicle (1) to be moved by using a stiff pressurized hydraulic hose (59).

29. The moving apparatus according to claim 28, characterized in that there is a steering and feeding device attached to the hydraulic hose (59) coming from the hydraulic pump (30), which steering and feeding device (31) moves the moving apparatus forwards by feeding the hydraulic hose and turns the moving apparatus by bending the hydraulic hose.

30. The moving apparatus according to claim 29, characterized in that the steering and feeding device of the moving apparatus consists of two pairs of rolls (32, 33) of which pairs of rolls one (32) feeds the hydraulic hose (59) and the other (33) bends the hydraulic hose (59).

**Patentansprüche**

1. Vorrichtung zum Fortbewegen eines beräderten Fahrzeugs (1) beispielsweise eines Kraftfahrzeugs, Anhängers order Flugzeugs, auf einer Oberfläche (2) beispielsweise dem Erdboden, einer Straße, einem Flugplatz, einem Fußboden eines Gebäudes, einer Ladeplattform, der Fläche eines Wagens oder eines Eisenbahnwagens, mit zumindest einem Antriebsrad (4), das mittels einer Energiequelle (3) gedreht wird, und einer Drückvorrichtung (5), die unmittelbar oder mittelbar an diesem befestigt ist, um das Antriebsrad (4) gegen ein Rad (6) des zu bewegenden Fahrzeugs (1) zu drücken, wobei die Bewegung des Fahrzeugs (1) durch Drehung seines Rades (6) mittels des Antriebsrads (4) durchgeführt wird, wobei die Drückvorrichtung (5) des Antriebsrads (4) zumindest zwei gegenüberliegende Reibräder (8) aufweist, die mit Verbindungselementen (7) verbunden und in einem Abstand zueinander angeordnet sind, wobei die Reibräder an unterschiedlichen Stellen des Rads (6) des zu bewegenden Fahrzeugs (1) oder auf unterschielichen Seiten einer durch ein Fahrwerk (9) gebildeten Rädergruppe (6, 10) angeordnet sind, wobei zumindest eines der Reibräder (8) mittels der Verbindungselemente (7) bewegbar ist, so daß die Reibräder (8) gegen das Rad (6) oder die Rädergruppe (6, 10) des zu bewegenden Fahrzeugs (1) gedrückt werden, und wobei zumindest eines der Reibräder das durch die Energiequelle gedrehte Antriebsrad (4) ist, dadurch gekennzeichnet, daß die zumindest zwei Reibräder (8) der Drückvorrichtung (5) mittels des Verbindungselements (7) zueinander bewegbar miteinander verbunden sind, wobei mittels des Verbindungselements (7) der Abstand zwischen den Reibrädern (8) verkleiner- oder vergrößerbar ist.

2. Vorrichtung nach Anspruch 1, dadurch gekennzeichnet, daß die Drückvorrichtung (5) zumindest zwei Reibräder (8) aufweist, die auf unterschiedlichen Seiten der Räder oder der Rädergruppen (6 und 10) des zu bewegenden Fahrzeugs angeordnet und die miteinander mittels eines Verbindungsstücks (15) verbunden sind, so daß der Abstand zwischen den Reibrädern konstant und kleiner als der Durchmesser des Rads oder der Rädergruppe des zu bewegenden Fahrzeugs ist, und daß die Reibräder (8) gegen das Rad oder die Rädergruppe, das bzw. die zwischen ihnen bleibt, gedrückt werden kann, indem das Verbindungsstück (15) in Richtung auf die Achse (16) des Rads oder die Achsen der Räder des zu bewegenden Fahrzeugs bewegt wird.

3. Vorrichtung nach einem der Ansprüche 1 oder 2, dadurch gekennzeichnet, daß die Drückvorrichtung (5) Drückelemente (13) aufweist, die auf beiden Seiten des Rads (6) oder der Rädergruppe (6 und 10) des zu bewegenden Fahrzeugs (1) angeordnet sind, und die jeweils zumindest zwei Reibräder (8) aufweisen, die an sie befestigt sind, wobei die Drückelemente (13) gegen das Rad oder die Rädergruppe des zu bewegenden Fahrzeugs drückbar sind.

4. Vorrichtung nach Anspruch 3, dadurch gekennzeichnet, daß an den Drückelementen (13) mittels Drehgelenken (14) ein Verbindungselement (7) angebracht ist, das zwischen den Reibrädern (8) angeordnet ist und mittels dem die Drückelemente in Richtung aufeinander zu bewegbar sind.

5. Vorrichtung nach Anspruch 3, dadurch gekennzeichnet, daß die Drückelemente (13) mittels Verbindungsstücken miteinander verbunden sind, die in Richtung auf die Achse des Rads (6) oder die Achsen der Rädergruppe (6 und 10) des zu bewegenden Fahrzeugs (1) bewegbar sind.

6. Vorrichtung nach Anspruch 1 oder 2, dadurch gekennzeichnet, daß die Drückvorrichtung (5) ein Doppeldrückteil aufweist, das durch drei Reibräder (8) gebildet ist und daß an einem Fahrwerk (9), das aus zumindest zwei Rädern (6 und 10) des zu bewegenden Fahrzeugs (1) gebildet ist, angebracht werden kann, wobei die drei Reibräder mittels Verbindungsstücken (15) aneinander angebracht sind, so daß die Achse (17) des gemeinsamen Reibrads oder ihr Vorsprung das Gelenk zwischen den beiden einen Winkel bildenden Verbindungsstücken bildet, und daß ein Verbindungselement (7) zwischen den beiden anderen Breibrädern angebracht ist, um diese voneinander wegzubewegen.

7. Vorrichtung nach Anspruch 1, dadurch gekennzeichnet, daß die Drückvorrichtung (5) zwei Reibräder (8) aufweist, die mittels Verbindungselementen (7) in Richtung aufeinanderzu bewegbar sind, wobei die Drückvorrichtung zwischen den beiden Rädern (6 und 10) des Fahrwerks (9) des zu bewegenden Fahrzeugs (1) bewegbar ist, so daß beide Reibräder durch die zwei Räder des zu bewegenden Fahrzeugs gelagert sind.

8. Vorrichtung nach einem der Ansprüche 1 bis 7, dadurch gekennzeichnet, daß die Reibräder (8) zur Seite schwenkbar sind, wenn die Vorrichtung mit dem zu bewegenden Fahrzeug (1) in Eingriff oder außer Eingriff gebracht wird.

9. Vorrichtung nach einem der Ansprüche 1 bis 8, dadurch gekennzeichnet, daß die Druckkräfte (P) der gegen das Rad (6) oder die Rädergruppe (6 und 10) des zu bewegenden Fahrzeugs (1) gerichteten Reibräder (8) einen Winkel ($\beta$) bilden der vorzugsweise zwischen 90° und 180° liegt.

10. Vorrichtung nach einem der Ansprüche 1 bis 9, zur Fortbewegung eines beräderten Fahrzeugs (1) auf einer Oberfläche (2), wobei das Fahrzeug biespielsweise ein Kraftfahrzeug, ein Anhänger oder ein Flugzeug auf einem Flugplatz ist, und wobei die Oberfläche beispielsweise Erdboden, eine Straße, ein Flughafen, ein Fußboden eines Gebäudes, eine Ladeplattform, eine Fläche eines Wagens oder Eisenbahnwagens ist, wobei die Vorrichtung einen Rahmen (20), ein Antriebsrad (4), das durch einen Motor (3) gedreht wird, und eine Drückvorrichtung (5) aufweist, die unmittelbar oder mittelbar am Antriebsrad (4) angebracht ist, um es gegen das Rad (6) des zu bewegenden Fahrzeugs zu drücken, so daß das Fahrzeug durch Drehung seines Rads (6) mittels des Antriebsrads bewegt wird, wobei die Drückvorrichtung (5) der Vorrichtung zumindest zwei Reibräder (8) aufweist, die mittels Verbindungselementen (7) miteinander verbunden sind, von denen zumindest eins ein durch einen Motor (3) getriebenes Antriebsrad ist und von denen zumindest eins mittels der Verbindungselemente bewegbar ist, so daß die Reibräder auf unterschiedlichen Seiten gegen das Rad oder die Rädergruppe (6 und 10), die durch ein Fahrwerk (9) gebildet ist, des zu bewegenden Fahrzeugs gedrückt werden, dadurch gekennzeichnet, daß die Vorrichtung zumindest ein Erdrad (11) aufweist, das an ihren Rahmen (20) angebracht ist und auf der Oberfläche (2) ruht.

11. Vorrichtung nach Anspruch 10, dadurch gekennzeichnet, daß das Erdrad (11) zumindest dann frei dreht, wenn die Vorrichtung bewegt wird.

12. Vorrichtung nach Anspruch 10 oder 11, dadurch gekennzeichnet, daß das zumindest eine Erdrad (11) zumindest dann mittels eines Motors oder einer ähnlichen Energiequelle drehbar ist, wenn die Vorrichtung nicht an dem zu bewegenden Fahrzeug (1) angebracht ist.

13. Vorrichtung nach Anspruch 10, 11 oder 12, dadurch gekennzeichnet, daß die Vorrichtung einen Rahmen (20), der mit vier Erdrädern (11) versehen ist, aufweist, an dem die Drückvorrichtung (5) und die zu ihr gehörenden Reibräder (8) angebracht sind.

14. Vorrichtung nach einem der Ansprüche 10 bis 13, dadurch gekennzeichnet, daß das auf der Oberfläche (2) ruhende Erdrad (11) an dem Reibrad (8) angebracht ist, beispielsweise in der Weise, daß das Erdrad auf der Achse (12) des Reibrads oder ihrer Verlängerung angelenkt ist.

15. Vorrichtung nach einem der Ansprüche 10 bis 14, dadurch gekennzeichnet, daß die Drückvorrichtung (5) zwei Reibräder (8) aufweist, die auf unterschiedlichen Seiten des Rads (6) oder der Rädergruppe (6 und 10) des zu bewegenden Fahrzeugs (1) angeordnet sind, auf deren Achsen (12) auf der Oberfläche (2) ruhende Erdräder (11) angelenkt sind, und daß das Verbindungselement (7), das die Reibräder in Richtung aufeinanderzu bewegt, an den Achsen der Reibräder oder deren Verlängerungen angebracht ist.

16. Vorrichtung nach einem der Ansprüche 10 bis 14, dadurch gekennzeichnet, daß an den Drückelementen (13) Erdräder (11), die auf der Oberfläche (2) ruhen, an der Achse des Drehgelenks (14) oder ihrer Verlängerung zwischen den Reibrädern (8) angelenkt sind.

17. Vorrichtung nach einem der Ansprüche 10 bis 16, dadurch gekennzeichnet, daß zumindest eins der an dem Rahmen (20) der Vorrichtung angebrachten und auf der Oberfläche (2) ruhenden Erdräder (11) drehend ist.

18. Vorrichtung nach Anspruch 17, dadurch gekennzeichnet, daß das zumindest eine der auf der Oberfläche (2) ruhenden Erdräder (11) freidrehend ist.

19. Vorrichtung nach Anspruch 17 oder 18, dadurch gekennzeichnet, daß das zumindest eine der auf der Oberfläche (2) ruhenden Erdräder (11) zwecks Steuerung der Vorrichtung schwenkbar ist.

20. Vorrichtung nach einem der Ansprüche 17 bis 19, dadurch gekennzeichnet, daß alle am Rahmen (20) angebrachten und auf der Oberfläche (2) ruhenden Erdräder (11) schwenkbar sind und daß vorzugsweise drei oder vier Erdräder vorgesehen sind.

21. Vorrichtung nach einem der Ansprüche 10 bis 20, dadurch gekennzeichnet, daß der Rahmen (20) der Vorrichtung auf einer Seite offen ist, so daß die Vorrichtung durch Schwenkung der Erdräder an das Rad (6) oder die Rädergruppe (6 und 10), die mittels eines Fahrwerks (9) gebildet ist, des zu bewegenden Fahrzeugs (1) von der Seite her, d.h. parallel zur Achse des Rads (16) angenähert werden kann.

22. Vorrichtung nach Anspruch 21, dadurch gekennzeichnet, daß der Rahmen (20) der Vorrichtung aus einem U-förmigen Rohr oder Träger besteht, der das Rad (6) oder die Rädergruppe (6 und 10) an einer Seite durchläßt, und daß die Verlängerung zumindest eines Endes des Rohrs oder des Trägers einen Gleitträger für eine Buchse (38) ausbildet, an der ein Reibrad (8) angebracht ist, welches in Richtung auf das Rad des zu bewegenden Fahrzeugs bewegbar ist.

23. Vorrichtung nach einem der Ansprüche 1 bis 22, dadurch gekennzeichnet, daß die Drückvorrichtung (5) der Vorrichtung an einer Seite derart offen ist, daß die Drückelemente (13) auf unterschiedlichen Seiten des Rads (6) oder Rädergruppe (6 und 10) des zu bewegenden Fahrzeugs (1) Getriebe sind, an denen zumindest zwei Reibräder (8) angebracht sind, die durch einen Motor (3) gedreht werden.

24. Vorrichtung nach Anspruch 23, dadurch gekennzeichnet, daß die als Drückelemente (13) dienenden und mit Reibrädern (8) ausgerüsteten Getriebe über Gleitträger miteinander verbunden sind, mittels denen die Drückelemente aufeinanderzu bewegbar sind, so daß die Räder (6) oder die Rädergruppe (6 und 10) des zu bewegenden Fahrzeugs durch zumindest vier Reibräder (8) zusammengedrückt werden.

25. Vorrichtung nach Anspruch 23 oder 24, dadurch gekennzeichnet, daß die als Drückelemente (13) dienenden Getriebe auf eine geeignete Höhe anhebbar sind, die der Größe des Rads (6) des zu bewegenden Fahrzeugs entspricht, so daß die unteren Reibräder (8) und die oberen Reibräder (8) in Vertikalrichtung gleich weit von der Achse (16) des zu bewegenden Fahrzeugs entfernt sind.

26. Vorrichtung nach Anspruch 23, 24 oder 25, dadurch gekennzeichnet, daß die zwei Getriebe (13) aufweisende Drückvorrichtung (5) an einem Ende an einem mit Rädern (11) ausgerüstetem Fahrzeug (21) oder einer ähnlichen Einrichtung angebracht ist, so daß die Drückvorrichtung einen Vorsprung des Fahrzeugs bildet.

27. Vorrichtung nach Anspruch 26, dadurch gekennzeichnet, daß zumindest eins der Räder (11) des Transportfahrzeugs (51) in Reibkontakt mit zumindest einem Reibrad (8) der Drückvorrichtung (13) ist, so daß auch die Bewegung des Transportfahrzeugs (51) durch Drehung des Reibrads bewirkt werden kann.

28. Vorrichtung nach einem der Ansprüche 1 bis 27, dadurch gekennzeichnet, daß die Drückvorrichtung (5) der Vorrichtung mit zumindest einem Reibrad (8) ausgerüstet ist, das durch einen hydraulischen Motor (3) gedreht wird, wobei der hydraulische Motor druckbeaufschlagtes Hydraulikfluid von einer separaten Hydraulikpumpe (30) erhält, und daß diese Vorrichtung zu dem Rad (6) oder der Rädergruppe (6 und 10) des zu bewegenden Fahrzeugs unter Anwendung eines steifen, druckbeaufschlagten Hydraulikschlauchs (59) gebracht wird.

29. Vorrichtung nach Anspruch 28, dadurch gekennzeichnet, daß an dem von der Hydraulikpumpe (30) kommenden Hydraulikschlauch (59) eine Steuer- und Vorschubvorrichtung angebracht ist, die die Vorrichtung durch Vorschub des Hydraulikschlauchs vorwärtsbewegt und die die Vorrichtung durch Biegung des Hydraulikschlauchs umrichtet.

30. Vorrichtung nach Anspruch 29, dadurch gekennzeichnet, daß die Steuer- und Vorschubvorrichtung der Vorrichtung zwei Paar Rollen (32, 33) aufweist, von denen ein Paar Rollen (32) den Hydraulikschlauch (59) vorschiebt und das andere Paar Rollen (33) den Hydraulikschlauch (59) umbiegt.

**Revendications**

1. Appareil mobile destiné à déplacer un véhicule monté sur roues (1), par exemple un véhicule à moteur, une remorque, caravane ou un avion sur une surface (2), par exemple un sol, une route, un aérodrome, un plancher de bâtiment, une plate-forme de chargement, l'arrière d'un camion ou d'un wagon de chemin de fer, l'appareil comprenant au moins une roue d'entraînement (4) mise en rotation par une source de puissance (3) et un dispositif de pression (5) fixé directement ou indirectement sur celui-ci pour mettre en pression la roue d'entraînement (4) contre une roue (6) du véhicule à déplacer, le déplacement du véhicule (1) ayant lieu par la rotation de sa roue (6) par la roue d'entraînement (4) ledit dispositif de pression (5) de la roue d'entraînement (4) comprenant au moins deux roues à friction (8) opposées qui sont reliées avec des éléments de liaison (7) et placées à distance l'une de l'autre, lesdites roues à friction étant placées sur les positions différentes de ladite roue (6) du véhicule (1) à déplacer ou sur des côtés différents d'un groupe de roues (6, 10) formé par un bogie (9), roues à friction (8) dont au moins une est mobile au moyen d'éléments de liaison (7) de sorte que les roues à friction (8) sont mises en pression contre la roue (6) ou groupe de roues (6, 10) du véhicule (1) à déplacer, roues à friction dont au moins une est la roue d'entraînement (4) mise en rotation par la source de puissance, caractérisé en ce qu'au moins deux roues à friction (8) du dispositif de pression (5) sont raccordées de façon relativement mobile entre elles au moyen de l'élément de liaison (7), grâce auquel la distance entre les roues à friction (8) peut être réduite ou augmentée.

2. Appareil mobile selon la revendication 1, caractérisé en ce qu'il est prévu au moins deux roues à friction (8) dans le dispositif de pression (5), placées sur les côtés différents des roues (6) ou groupe de roues (6 et 10) du véhicule à déplacer et raccordées entre elles au moyen d'un élément de liaison (15) de sorte que la distance entre ces roues à friction est constante et plus petite que le diamètre de la roue ou groupe de roues du véhicule à déplacer et que les roues à friction (8) peuvent être mises en pression contre la roue ou groupe de roues demeurant entre elles en déplaçant l'élément de raccordement (15) vers l'essieu (16) de la roue ou les essieux des roues de véhicule à déplacer.

3. Appareil mobile selon l'une quelconque des revendications 1 ou 2, caractérisé en ce que le dispositif de pression (5) consiste en des éléments de pression (13) positionnés des deux côtés de la roue (6) ou groupe des roues (6 et 10) du véhicule (1) à déplacer, lesquels éléments de pression comportent au moins deux roues à friction (8) chacun, fixées sur eux et dont les éléments de pression (13) peuvent être mis en pression contre la roue ou groupe de roues du véhicule à déplacer.

4. Appareil mobile selon la revendication 3, caractérisé en ce qu'il est prévu un élément de raccordement (7) fixé sur des éléments de pression (13) au moyen d'articulations à pivot (14) et placé entre des roues à friction (8), élément de raccordement (7) au moyen duquel les éléments de pression peuvent être déplacés l'un vers l'autre.

5. Appareil mobile selon la revendication 3, caractérisé en ce que les éléments de pression (13) sont reliés entre eux par des éléments de raccordement qui peuvent être déplacés vers l'essieu de la roue (6) ou les essieux du groupe de roues (6 et 10) du véhicule (1) à déplacer.

6. Appareil mobile selon la revendication 1 ou 2, caractérisé en ce que le dispositif de pression (5) consiste en un dispositif de pression double formé par trois roues à friction (8), lequel dispositif peut être fixé sur un bogie (9) formé par au moins deux roues (6 et 10) du véhicule (1) à déplacer et les trois roues à friction sont fixées l'une sur l'autre au moyen d'éléments de liaison (15) de sorte que l'essieu (17) de la roue à friction commune ou son prolongement forme le raccordement entre les deux éléments de liaison formant un angle et en ce qu'il est prévu un élément de liaison (7) fixé entre les deux autres roues à friction pour les éloigner l'une de l'autre.

7. Appareil mobile selon la revendication 1, caractérisé en ce que le dispositif de pression (5) consiste en deux roues à friction (8), lesquelles au moyen d'éléments de liaison (7) peuvent être déplacées l'une vers l'autre, lequel dispositif de pression peut être déplace entre les deux roues (6 et 10) du bogie (9) du véhicule (1) à déplacer, de sorte que les deux roues à friction sont supportées par les deux roues du véhicule à déplacer.

8. Appareil mobile selon l'une quelconque des revendications 1 à 7, caractérisé en ce que les roues à friction (8) peuvent être tournées de côté lorsque le dispositif mobile est mis en contact sur ou dégagé du véhicule (1) à déplacer.

9. Appareil mobile selon l'une quelconque des revendications 1 à 8, caractérisé en ce que les forces de pression (P) des roues à friction (8) dirigées contre la roue (6) ou groupe de roues (6 et 10) du véhicule (1) à déplacer forment un angle (β) qui est de préférence de 90—180°.

10. Appareil mobile selon l'une quelconque des revendications 1 à 9, destiné à déplacer un véhicule monté sur roues (1) sur une surface (2) lequel véhicule est par exemple un véhicule à moteur, une remorque, caravane ou un avion sur un aérodrome et la surface utilisée est un sol, une route, un aérodrome, un plancher de bâtiment, une plate-forme de chargement, l'arrière d'un camion ou d'un wagon de chemin de fer, lequel appareil mobile consiste en un châssis (20), une roue de commande (4) mise en rotation par un moteur (3) et un dispositif de pression (5) fixé directement ou indirectement sur celui-ci pour comprimer la roue de commande (4) contre la roue (6) du véhicule à déplacer de sorte que le véhicule est déplacé par rotation de sa roue (6) au moyen de la roue de commande, et le dispositif de pression (5) de l'appareil mobile comprend au moins deux roues à friction (8) reliées entre elles par des éléments de liaison (7), roues à friction dont au moins une est une roue de commande mise en rotation par un moteur (3) et roues à friction dont au moins une peut être mise en mouvement au moyen d'éléments de liaison de sorte que les roues de friction sont comprimées sur différents côtés contre la roue (6) ou groupe de roues (6 et 10) fermées par un bogie (9) du véhicule à déplacer, caractérisé en ce que l'appareil mobile comprend une roue au sol (11) fixée sur son châssis (20) et reposant sur la surface (2).

11. Appareil mobile selon la revendication 10, caractérisé en ce que la roue au sol (11) est librement mobile en rotation au moins pendant que l'appareil mobile est déplacé.

12. Appareil mobile selon la revendication 10 ou 11, caractérisé en ce qu'au moins une roue au sol (11) peut être mise en rotation au moyen d'un moteur ou d'une source de puissance similaire au moins lorsque l'appareil mobile n'est pas fixé sur le véhicule (1) à déplacer.

13. Appareil mobile selon la revendication 10, 11 ou 12, caractérisé en ce que l'appareil mobile consiste en un châssis (20) muni de quatre roues au sol (11) sur le châssis duquel sont fixés les dispositifs de pression (5) et les roues à friction (6) faisant partie de celui-ci.

14. Appareil mobile selon l'une quelconque des revendications 10 à 13, caractérisé en ce que la roue au sol (11) reposant sur la surface (2) est fixée sur la roue à friction (8) par exemple de façon que la roue au sol soit logée sur l'essieu (12) de la roue à friction ou sur son prolongement.

15. Appareil mobile selon l'une quelconque des revendications 10 à 14, caractérisé en ce que le dispositif de pression (5) consiste en deux roues à friction (8) de différents côtés de la roue (6) ou groupe de roues (6 et 10) du véhicule (1) à déplacer, sur les essieux (12) duquel sont logées des roues au sol (11) reposant sur la surface (2) et en ce que l'élément de liaison (7) déplaçant les roues à friction l'une vers l'autre est fixé sur les essieux et roues à friction ou sur leurs prolongements.

16. Appareil mobile selon l'une quelconque des revendications 10 à 14, caractérisé en ce que sur les éléments de pression (13) sont prévues des roues au sol (11) reposant sur la surface (2) et logées sur l'essieu de l'articulation à pivot (14) ou son prolongement entre les roues à friction (8).

17. Appareil mobile selon l'une quelconque des revendications 10 à 16, caractérisé en ce qu'au moins une des roues au sol (11) fixées sur le châssis (20) de l'appareil mobile et reposant sur la surface (2) est propre à être mise en rotation.

18. Appareil mobile selon la revendication 17, caractérisé en ce qu'au moins l'une des roues au sol (11) reposant sur la surface (2) est librement mobile en rotation.

19. Appareil mobile selon la revendication 17 ou 18, caractérisé en ce qu'au moins l'une des roues au sol (11) reposant sur la surface (2) peut être mise en rotation pour guider l'appareil mobile.

20. Appareil mobile selon l'une quelconque des revendications 17 à 19, caractérisé en ce que toutes les roues au sol (11) fixées sur le châssis (20) et reposant sur la surface (2) sont propres à être mises en rotation et en ce que le nombre préférable de roues au sol est de trois ou quatre.

21. Appareil mobile selon l'une quelconque des revendications 10 à 20, caractérisé en ce que le châssis (20) de l'appareil mobile est ouvert sur un côté de sorte que l'appareil mobile peut s'approcher, au moyen des roues au sol en rotation, de la roue (6) ou groupe de roues (6 et 10) formé d'un bogie (9) du véhicule (1) à déplacer à partir du sol c'est-à-dire parallèlement à l'essieu de la roue (16).

22. Appareil mobile selon la revendication 21, caractérisé en ce que le châssis (20) de l'appareil mobile consiste en un tube profilé en U ou en une barre qui permet le passage de la roue (6) ou groupe de roues (6 et 10) au travers sur une extrémité et en ce que le prolongement d'au moins une extrémité du tube ou de la barre présente propre à coopérer de façon coulissante avec un manchon (38) sur lequel est fixée une roue à friction (8), laquelle roue à friction (8) peut être déplacée vers la roue du véhicule à déplacer.

23. Appareil mobile selon l'une quelconque des revendications 1 à 22, caractérisé en ce que le dispositif de pression (5) de l'appareil mobile est ouvert sur un côté de sorte que les éléments de pression (13) sur différents côtés de la roue (6) ou groupe de roues (6 et 10) du véhicule (1) à déplacer sont des engrenages ou réducteurs sur lesquels sont fixées au moins deux roues à friction (8) mises en rotation au moyen d'un moteur (3).

24. Appareil mobile selon la revendication 23, caractérisé en ce que les engrenages ou réducteurs servant d'éléments de pression (13) et munis de roues à friction (8) sont reliés entre eux par des barres colissantes au moyen desquelles les éléments de pression peuvent être déplacés l'un vers l'autre de sorte que la roue (6) ou groupe de roues (6 et 10) du véhicule (1) à déplacer sont comprimées au moins par quatre roues à friction (8).

25. Appareil mobile selon la revendication 23 ou 24, caractérisé en ce que les engrenages ou réducteurs servant d'éléments de pression (13) peuvent être relevés sur une hauteur appropriée en fonction de la dimension de la roue (6) du véhicule à déplacer, de sorte que les roues à friction inférieures (8) et les roues à friction supérieures (8) sont verticalement équidistance de l'essieu (16) du véhicule à déplacer.

26. Appareil mobile selon la revendication 23, 24 ou 25, caractérisé en ce que le dispositif de pression (5) consistant en deux engrenages ou réducteurs (13) est fixé sur un véhicule (51) muni des roues et d'un dispositif similaire à une extrémité de sorte que le dispositif de pression forme un prolongement au véhicule.

27. Appareil mobile selon la revendication 26, caractérisé en ce qu'au moins une des roues (11) du véhicule de transport (51) est en contact de friction avec au moins une roue à friction (8) du dispositif de pression (13) de sorte que le véhicule de transport (51) peut également être déplacé par rotation de la roue à friction.

28. Appareil mobile selon l'une quelconque des revendications 1 à 27, caractérisé en ce que le dispositif de pression (5) de l'appareil mobile est doté d'au moins une roue à friction (8) mise en rotation par un moteur hydraulique (3), lequel moteur hydraulique reçoit le fluide hydraulique sous pression depuis une pompe hydraulique séparée (30), et en ce que l'appareil mobile est amené sur la roue (6) ou groupe de roues (6 et 10) du véhicule (1) à déplacer en utilisant un tuyau flexible hydraulique (59) rendu rigide par la pression.

29. Appareil mobile selon la revendication 28, caractérisé en ce qu'il est prévu un dispositif de guidage ou d'alimentation fixé sur le tuyau flexible hydraulique (59) en provenance de la pompe hydraulique (30), lequel dispositif de guidage et d'alimentation (31) déplace l'appareil mobile en avant, en alimentant le tuyau flexible hydraulique et fait tourner l'appareil mobile par flexion du tuyau flexible hydraulique.

30. Appareil mobile selon la revendication 29, caractérisé en ce que le dispositif de guidage d'alimentation de l'appareil mobile consiste en deux paires de rouleaux (32, 33), dont une paire de rouleaux (32) alimente le tuyau flexible hydraulique (59) et l'autre paire (33) met le tuyau flexible hydraulique (59) en flexion.

FIG.1

FIG.2

FIG.3

FIG.4

FIG.5

FIG.6

FIG. 7

FIG. 8

F I G. 9

F I G. 10

F I G. 11

FIG.12

FIG. 13

FIG.14

FIG.15

FIG.16

FIG.17

FIG.18

FIG. 19

FIG. 20

0 156 842

FIG. 21

0 156 842

FIG. 22

FIG. 23

FIG.24